# EUROPEAN PATENT APPLICATION

(11) **EP 4 664 007 A1**
(43) Date of publication of application: **17.12.2025**
(21) Application number: 24753144.5
(22) Date of filing: 25.01.2024
(51) Int. Cl.: F23G 5/50, B01D 53/14, B01D 53/50, B01D 53/68, B01D 53/78, F23C 9/06, F23G 5/00, F23J 15/00, F23L 7/00

(54) **WASTE INCINERATION FACILITY**

(30) Priority: 09.02.2023 JP 2023018196
(71) Applicant: Kanadevia Corporation, Osaka-shi, Osaka 559-8559 (JP)
(72) Inventor: IZUMISAWA, Yuya, Osaka-shi, Osaka 559-8559 (JP); OHSHIMA, Tsubasa, Osaka-shi, Osaka 559-8559 (JP); ISHIBA, Koya, Osaka-shi, Osaka 559-8559 (JP)
(74) Representative: Grünecker Patent- und Rechtsanwälte PartG mbB
(86) International application number: PCT/JP2024/002258
(87) International publication number: WO 2024/166700

(57) **Abstract**

A waste incineration plant (1) includes a flue gas recirculator (5) that takes out part of a flue gas flowing in a flue gas passage (4) as a recirculating flue gas through a recirculating flue gas line (52) and supplies the recirculating flue gas into an incinerator (3), an oxygen mixer (6) that mixes a high-concentration oxygen gas having a higher oxygen concentration than air with the recirculating flue gas flowing in the recirculating flue gas line (52), and a concentration measuring device (21, 22) that measures a carbon dioxide concentration in the recirculating flue gas flowing in the recirculating flue gas line (52). The recirculating flue gas supplied into the incinerator (3) is a main gas of a gas for combustion that is used to incinerate waste in the incinerator (3), and a concentration-related value relating to the carbon dioxide concentration in the recirculating flue gas supplied into the incinerator (3) is derived from a measured value obtained by the concentration measuring device (21, 22). The controller controls the mixture amount of the high-concentration oxygen gas to be mixed by the oxygen mixer (6) to make the concentration-related value fall within a set range within which the NOx concentration inside the incinerator (3) is lowered.

## Description

### TECHNICAL FIELD

The present invention relates to a waste incineration plant.

### CROSS-REFERENCE TO RELATED APPLICATIONS

This application claims priority benefit of Japanese Patent Application No. JP2023-18196 filed in the Japan Patent Office on February 9, 2023, the entire disclosure of which is incorporated herein by reference.

### BACKGROUND ART

Conventionally, various waste incineration plants that reduce nitrogen oxides (NOx) in a flue gas have been proposed. For example, the incinerators disclosed in Japanese Patent Application Laid-Open No. H5-126324 (Document 1) and Japanese Patent Application Laid-open No. H10-9538 (Document 2) suppress the production of NOx by incinerating municipal solid waste with oxygen (O₂) produced by separation of nitrogen (N₂) from air. The incinerator according to Document 2 further sets the proportion of fuel supplied to the incinerator such that the concentration of O₂ remaining in the flue gas becomes lower than or equal to a predetermined concentration. The combustion equipment disclosed in Japanese Patent Application Laid-Open No. 2001-241629 (Document 3) prevents the production of NOx by introducing primary air short of O₂ from below a stoker onto which waste to be incinerated are introduced, and thereby creating a reducing atmosphere.

The publication of Japanese Patent No. 3902454 (Document 4) describes a combustion control method of measuring the concentration of NOx in a flue gas and, when the measured concentration of NOx falls outside a predetermined set range, correcting a target value or range of the O₂ concentration in the flue gas by increment or decrement. Japanese Patent Application Laid-Open No. H11-72215 (Document 5) discloses a technique for balancing the NOx concentration and the CO concentration within an adequate range even with wide fluctuations in the state of combustion. According to this technique, the adequate range having a certain permissible degree of fluctuation is set within a control range of the O₂ concentration, and then the air flow rate is controlled by using the O₂ concentration as an index so that the O₂ concentration is maintained within the adequate range, and the adequate range of the O₂ concentration is shifted on the basis of the NOx concentration and the CO concentration.

"Toward Near Zero Emission Coal-Fired Power Stations -Development and Demonstration of Oxyfuel Combustion Technology of Pulverized Coal," by Takashi KIGA and three others, Journal of the Combustion Society of Japan, 2011, vol. 53, No. 166, pp. 230-237 discloses that, in the combustion of coal with O₂, the ratio of conversion to NOx decreases as the CO₂ gas concentration increases.

"Elucidation of the reduction mechanism of recirculated NOx in coal oxyfuel combustion," by Takashi MARUMO and three others, papers from the 48th Japanese Combustion Symposium, 2010, pp. 590-591 describes an experiment using an experimental apparatus capable of blowing not only a primary gas but also a secondary gas, in which the conversion ratio of NH₃ flowing in with the primary gas to NO and the reduction ratio of NO flowing in with the secondary gas are determined by changing the CO₂ concentration in both of the primary gas and the secondary gas to 70% and then to 60%. According to the experimental result, no difference depending on the CO₂ concentration was observed in the primary NO conversion ratio, but the reduction ratio of NO flowing in with the secondary gas was strongly affected by the CO₂ concentration. Comparing the condition with the CO₂ concentration of 70% and the condition with the CO₂ concentration of 60%, the condition with the CO₂ concentration of 60% had a higher secondary NO reduction ratio.

In recent years, waste incineration plants take out part of a flue gas flowing in a flue gas passage as a recirculating flue gas and supply the recirculating flue gas into an incinerator. The use of the recirculating flue gas enables reducing the amount of flue gas exhausted from the waste incineration plants. In the case where a high-concentration O₂ gas is mixed with the recirculating flue gas to be used as a gas for combustion, it is possible to create a high carbon-dioxide (CO₂) concentration atmosphere in the incinerator and to increase the CO₂ concentration in the flue gas. This allows efficient separation of carbon dioxide. Meanwhile, such waste incineration plants are also required to reduce the NOx concentration in the flue gas.

### SUMMARY OF THE INVENTION

It is an object of the present invention to reduce the NOx concentration in a flue gas in a waste incineration plant that mixes a high-concentration O₂ gas with a recirculating flue gas and uses the recirculating flue gas as a gas for combustion.

Aspect 1 of the present invention is a waste incineration plant that includes an incinerator that incinerates waste, a flue gas passage in which a flue gas exhausted from the incinerator flows, a dust collector provided in the flue gas passage, a flue gas recirculator that includes a recirculating flue gas line and takes out part of the flue gas flowing in the flue gas passage as a recirculating flue gas through the recirculating flue gas line to supply the recirculating flue gas into the incinerator, the recirculating flue gas line connecting the incinerator and a discharge position located downstream of the dust collector in the flue gas passage, an oxygen mixer that mixes a high-concentration oxygen gas having a higher oxygen concentration than air with the recirculating flue gas flowing in the recirculating flue gas line, a concentration measuring device that measures at least a carbon dioxide concentration in the recirculating flue gas flowing in the recirculating flue gas line, and a controller that controls a mixture amount of the high-concentration oxygen gas to be mixed by the oxygen mixer to make a concentration-related value fall within a set range within which an NOx concentration inside the incinerator is lowered, the concentration-related value relating to a carbon dioxide concentration in the recirculating flue gas supplied into the incinerator, the concentration-related value being derived from a measured value obtained by the concentration measuring device, the recirculating flue gas supplied into the incinerator being a main gas of a gas for combustion that is used to incinerate the waste in the incinerator.

According to the present invention, it is possible to reduce the NOx concentration in the flue gas.

Aspect 2 of the present invention is the waste incineration plant according to Aspect 1 that further includes a wet scrubber that is arranged between the dust collector and the discharge position in the flue gas passage and makes constant a water content in the recirculating flue gas.

Aspect 3 of the present invention is the waste incineration plant according to Aspect 1 (or according to Aspect 1 or 2) that further includes a nitrogen mixer that mixes a high-concentration nitrogen gas having a higher nitrogen concentration than the recirculating flue gas with the recirculating flue gas flowing in the recirculating flue gas line. The controller controls a mixture amount of the high-concentration nitrogen gas to be mixed by the nitrogen mixer to make the concentration-related value fall within the set range.

Aspect 4 of the present invention is a waste incineration plant that includes an incinerator that incinerates waste, a flue gas passage in which a flue gas exhausted from the incinerator flows, a dust collector provided in the flue gas passage, a flue gas recirculator that includes a recirculating flue gas line and takes out part of the flue gas flowing in the flue gas passage as a recirculating flue gas through the recirculating flue gas line to supply the recirculating flue gas into the incinerator, the recirculating flue gas line connecting the incinerator and a discharge position located downstream of the dust collector in the flue gas passage, an oxygen mixer that mixes a high-concentration oxygen gas having a higher oxygen concentration than air with the recirculating flue gas flowing in the recirculating flue gas line, a nitrogen mixer that mixes a high-concentration nitrogen gas having a higher nitrogen concentration than the recirculating flue gas with the recirculating flue gas flowing in the recirculating flue gas line, a concentration measuring device that measures at least a carbon dioxide concentration in the recirculating flue gas flowing in the recirculating flue gas line, and a controller that controls a mixture amount of the high-concentration nitrogen gas to be mixed by the nitrogen mixer to make a concentration-related value fall within a set range within which an NOx concentration inside the incinerator is lowered, the concentration-related value relating to a carbon dioxide concentration in the recirculating flue gas supplied into the incinerator, the concentration-related value being derived from a measured value obtained by the concentration measuring device, the recirculating flue gas supplied into the incinerator being a main gas of a gas for combustion that is used to incinerate the waste in the incinerator.

Aspect 5 of the present invention is the waste incineration plant according to Aspect 3 or 4, in which the oxygen mixer includes an oxygen producer that produces the high-concentration oxygen gas by extracting oxygen from air, and the high-concentration nitrogen gas contains air exhausted from the oxygen producer after extraction of oxygen.

Aspect 6 of the present invention is the waste incineration plant according to Aspect 3 or 4 (or according to any one of Aspects 3 to 5), in which the recirculating flue gas line branches off into a gas line for primary combustion and a gas line for secondary combustion, the gas line for primary combustion being connected to a primary combustion chamber of the incinerator, the gas line for secondary combustion being connected to a secondary combustion chamber of the incinerator, and the nitrogen mixer includes a first nitrogen supplier that supplies the high-concentration nitrogen gas to the gas line for primary combustion and a second nitrogen supplier that supplies the high-concentration nitrogen gas to the gas line for secondary combustion.

Aspect 7 of the present invention is the waste incineration plant according to any one of Aspects 1 to 4 (or according to any one of Aspects 1 to 6) that further includes an NOx-concentration measuring device that measures an NOx concentration in the flue gas exhausted from the incinerator. When a measured value obtained by the NOx-concentration measuring device is greater than or equal to a predetermined value, the controller increases a flow rate of the recirculating flue gas supplied by the flue gas recirculator to become higher than when the measured value is less than the predetermined value.

Aspect 8 of the present invention is the waste incineration plant according to any one of Aspects 1 to 4 (or according to any one of Aspects 1 to 7) that further includes an NOx-concentration measuring device that measures an NOx concentration in the flue gas exhausted from the incinerator. Controlling of the mixture amount by the controller is performed when a measured value obtained by the NOx-concentration measuring device is greater than or equal to a predetermined value.

Aspect 9 of the present invention is the waste incineration plant according to any one of Aspects 1 to 4 (or according to any one of Aspects 1 to 8), in which the recirculating flue gas line branches off into a gas line for primary combustion and a gas line for secondary combustion, the gas line for primary combustion being connected to a primary combustion chamber of the incinerator, the gas line for secondary combustion being connected to a secondary combustion chamber of the incinerator, and the oxygen mixer includes a first oxygen supplier that supplies the high-concentration oxygen gas to the gas line for primary combustion and a second oxygen supplier that supplies the high-concentration oxygen gas to the gas line for secondary combustion.

These and other objects, features, aspects and advantages of the present invention will become more apparent from the following detailed description of the present invention when taken in conjunction with the accompanying drawings.

### BRIEF DESCRIPTION OF DRAWINGS

Fig. 1 is a block diagram showing a configuration of a waste incineration plant.
Fig. 2 is a diagram showing a configuration of an incinerator.
Fig. 3 is a block diagram showing a controller and others.
Fig. 4 is a diagram showing CO₂-NOx concentration information.

### DESCRIPTION OF EMBODIMENTS

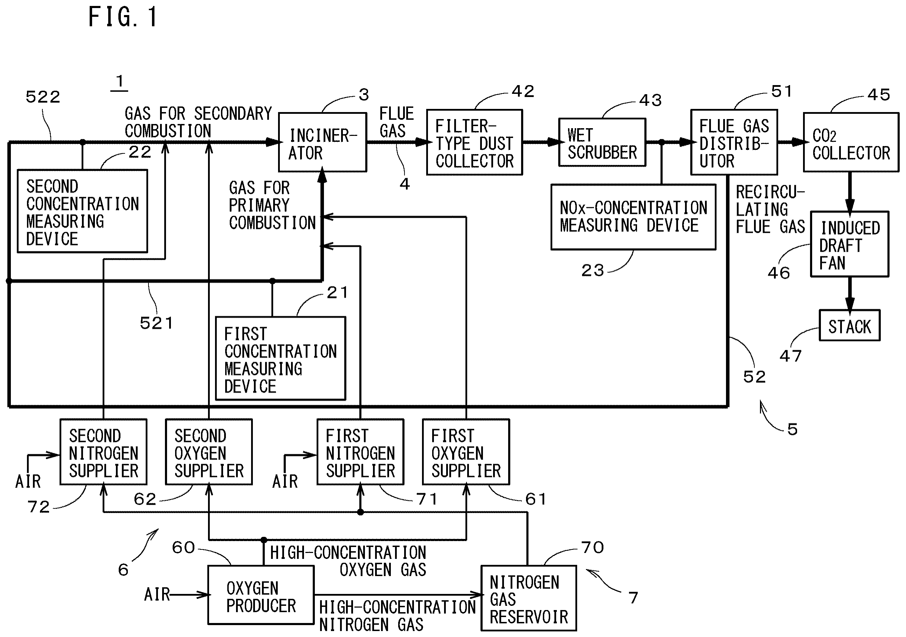

Fig. 1 is a block diagram showing a configuration of a waste incineration plant 1 according to one embodiment of the present invention. The waste incineration plant 1 is a waste incineration plant and includes an incinerator 3 and a flue gas passage 4. The incinerator 3 incinerates garbage that is waste. The flue gas passage 4 is a flue in which a flue gas exhausted from the incinerator 3 flows. In the example shown in Fig. 1, the flue gas passage 4 is a flow passage from the incinerator 3 to a stack 47 which will be described later. In Fig. 1, the reference sign 4 is given to only the arrow immediately downstream of the incinerator 3.

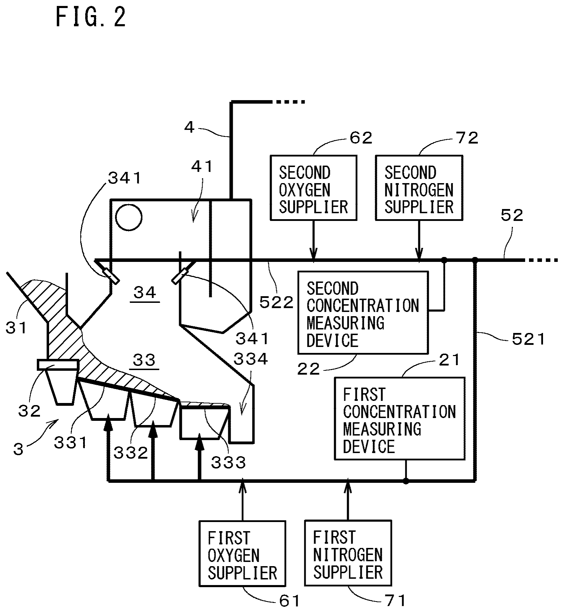

Fig. 2 is a diagram showing a configuration of the incinerator 3 and also shows other configurations connected to the incinerator 3. The incinerator 3 includes a feed hopper 31, a garbage supplier 32, a primary combustion chamber 33, and a secondary combustion chamber 34. The feed hopper 31 receives garbage disposed of from a garbage pit which is not shown. The garbage supplier 32 may include, for example, a pusher or a screw feeder and supply garbage from the bottom of the feed hopper 31 into the primary combustion chamber 33.

The primary combustion chamber 33 includes a drying grate 331, a combustion grate 332, a post-combustion grate 333, and a discharge port 334 that are aligned at the bottom in order in a direction away from the garbage supplier 32. In the drying grate 331, the combustion grate 332, and the post-combustion grate 333, garbage is transported from the side of the garbage supplier 32 toward the discharge port 334 by a common transport operation. In each of the drying grate 331, the combustion grate 332, and the post-combustion grate 333, a gas for primary combustion described later is ejected toward the inside of the primary combustion chamber 33 so as to burn the garbage that is under transport. The burnt garbage (mainly, ash) is discharged via the discharge port 334 to the outside of the primary combustion chamber 33. There may be a case where the incinerator 3 includes a nozzle provided in, for example, a ceiling portion that covers above the post-combustion grate 333, and a gas for stirring the inside of the primary combustion chamber 33 is ejected from this nozzle.

The secondary combustion chamber 34 is a space surrounded by a side wall portion and is continuous directly from the primary combustion chamber 33 so as to form a flow passage of the flue gas exhausted from the primary combustion chamber 33. In the example shown in Fig. 2, the secondary combustion chamber 34 is a space that expands upward and has a passage area that is sufficiently smaller than the floor area of the primary combustion chamber 33. The side wall portion of the secondary combustion chamber 34 is provided with a plurality of nozzles 341 from which a gas for secondary combustion described later is ejected. This helps burning an unburnt gas produced in the primary combustion chamber 33. The secondary combustion chamber 34 is part of the incinerator 3, and a downstream flow passage from the outlet of the secondary combustion chamber 34 serves as the flue gas passage 4 described previously. In Fig. 2, the reference sign 41 is given to an area where a boiler tubes bundle 41 is provided. The boiler tubes bundle 41 produces steam by using the flue gas as a heat source.

As shown in Fig. 1, the waste incineration plant 1 further includes a filter-type dust collector 42 (hereinafter, simply referred to as the "dust collector 42"), a wet scrubber 43, a flue gas distributor 51, a carbon dioxide (CO₂) collector 45, an induced draft fan 46, and the stack 47. The dust collector 42, the wet scrubber 43, the flue gas distributor 51, the CO₂ collector 45, the induced draft fan 46, and the stack 47 are provided in the flue gas passage 4 and arranged in order from the upstream side to the downstream side in the direction of flow of the flue gas (i.e., from the incinerator 3 toward the stack 47).

The dust collector 42 is a so-called bag filter and collects fly ash contained in the flue gas on a filter cloth. The dust collector 42 may also be other than a bag filter. Alternatively, a powder agent for flue gas treatment may be supplied to the flue gas on the upstream side of the dust collector 42 and collected together with fly ash by the dust collector 42. The powder agent for flue gas treatment is used to remove substances such as sulfur oxides, hydrogen chlorides, dioxins, or mercury compounds. The temperature of the flue gas at the outlet of the dust collector 42 may be in the range of, for example, 150°C to 200°C. The flue gas that has passed through the dust collector 42 flows into the wet scrubber 43.

The wet scrubber 43 may, for example, spray the flue gas with a liquid containing water and an alkali agent such as caustic soda. This lowers the temperature of the flue gas to an approximately constant temperature of, for example, 30°C to 70°C and removes substances such as sulfur oxides or hydrogen chloride contained in the flue gas. The wet scrubber 43 serves as a desulfurizer that removes sulfur oxides in the flue gas and also serves as a dechlorinator that removes hydrogen chlorides in the flue gas. As described previously, the temperature of the flue gas that has passed through the wet scrubber 43 is approximately constant, and the water content in the flue gas (the water content per unit volume) is also approximately constant with a saturated water vapor content at that temperature. The flue gas distributor 51 guides part of the flue gas flowing in the flue gas passage 4 to a recirculating flue gas line 52 which will be described later. Details of the flue gas distributor 51 will be described later.

The CO₂ collector 45 collects CO₂ from the flue gas that has passed through the flue gas distributor 51 (the flue gas flowing in the flue gas passage 4). One example of the CO₂ collector 45 is equipment that collects CO₂ by using a chemical absorption method and that includes an absorber and a regenerator. For example, in the absorber, flue gas can be sprayed with a liquid containing amine and water so that CO₂ is absorbed in the liquid. That is, CO₂ is removed from the flue gas. The liquid that has absorbed CO₂ is transported to and heated in the regenerator in order to take out and collect CO₂. The collected CO₂ may be used to produce methane by methanation, or may be stored in the ground or the like (carbon dioxide capture, utilization, and storage: CCUS). As will be described later, the waste incineration plant 1 can efficiently collect CO₂ because the flue gas has a high CO₂ concentration. The CO₂ collector 45 may also use a different method other than the chemical absorption method when collecting CO₂.

The induced draft fan 46 forms a flow of gas from the upstream side to the downstream side in the flue gas passage 4 (i.e., a flow of gas from the incinerator 3 toward the stack 47). The flue gas that has passed through the induced draft fan 46 is exhausted to the outside from the stack 47.

The waste incineration plant 1 further includes a flue gas recirculator 5, an oxygen mixer 6, and a nitrogen mixer 7. The flue gas recirculator 5 includes the flue gas distributor 51 described previously and the recirculating flue gas line 52. The recirculating flue gas line 52 is a gas flow passage and has one end connected to a discharge position located downstream of the dust collector 42 in the flue gas passage 4. In the example shown in Fig. 1, the discharge position is a position of the block that corresponds to the flue gas distributor 51. Through the recirculating flue gas line 52, part of the flue gas flowing in the flue gas passage 4 is taken out as a recirculating flue gas. The preferable recirculating flue gas line 52 is provided with a fan that forms a flow of the recirculating flue gas in a direction away from the discharge position. In the flue gas passage 4, since the CO₂ collector 45 is provided downstream of the discharge position and the wet scrubber 43 is provided upstream of the discharge position, the recirculating flue gas taken out from the discharge position has a high CO₂ concentration and an approximately constant water concentration (water content). Depending on the design of the waste incineration plant 1, the discharge position may be located between the dust collector 42 and the wet scrubber 43.

The other end of the recirculating flue gas line 52 is connected to the incinerator 3, and the recirculating flue gas is supplied into the incinerator 3. In the example shown in Fig. 2, the recirculating flue gas line 52 branches off into a gas line for primary combustion 521 and a gas line for secondary combustion 522. The gas line for primary combustion 521 branches off into a plurality of lines that are connected respectively to wind boxes of the drying grate 331, the combustion grate 332, and the post-combustion grate 333. The gas line for secondary combustion 522 branches off into a plurality of lines that are connected respectively to the plurality of nozzles 341. As will be described later, the recirculating flue gas supplied into the incinerator 3 is used as a gas for combustion.

The flue gas distributor 51 shown in Fig. 1 may include, for example, a first damper and a second damper. The first damper is arranged in the vicinity of the downstream side of the discharge position in the flue gas passage 4. The second damper is arranged in the vicinity of the discharge position in the recirculating flue gas line 52. By adjusting the degrees of opening of the first and second dampers, the flue gas distributor 51 can change the flow rate of the recirculating flue gas flowing in the recirculating flue gas line 52. The flow rate of the recirculating flue gas can be specified by the degrees of opening of the first and second dampers. The recirculating flue gas line 52 may also be provided with a flowmeter that measures the flow rate of the recirculating flue gas.

The oxygen mixer 6 includes an oxygen producer 60, a first oxygen supplier 61, and a second oxygen supplier 62. The oxygen producer 60 produces a high-concentration O₂ gas having a higher O₂ concentration than air by extracting oxygen (O₂) from air. The O₂ concentration in the high-concentration O₂ gas may, for example, be higher than or equal to 50% (% by volume; the same applies below), preferably higher than or equal to 65%, more preferably higher than or equal to 80%, and yet more preferably 100%. The oxygen producer 60 may, for example, be a PSA oxygen-gas producer.

The first oxygen supplier 61 and the second oxygen supplier 62 receive a supply of the high-concentration O₂ gas from the oxygen producer 60. The first oxygen supplier 61 is connected to the gas line for primary combustion 521 and supplies the high-concentration O₂ gas to the recirculating flue gas flowing in the gas line for primary combustion 521. The second oxygen supplier 62 is connected to the gas line for secondary combustion 522 and supplies the high concentration O₂ gas to the recirculating flue gas flowing in the gas line for secondary combustion 522. Each of the first oxygen supplier 61 and the second oxygen supplier 62 is provided with, for example, a damper and can change a mixture amount of the high-concentration O₂ gas to be mixed with the recirculating flue gas by adjusting the degree of opening of the damper. The mixture amount of the high-concentration O₂ gas can be specified by the degree of opening of the damper. Each oxygen supplier may also be provided with a flowmeter that measures the flow rate of the high-concentration O₂ gas.

The mixed gas of the recirculating flue gas flowing in the gas line for primary combustion 521 and the high-concentration O₂ gas supplied from the first oxygen supplier 61 is supplied as a gas for primary combustion into the primary combustion chamber 33. The gas for primary combustion has an O₂ concentration that is higher than or equal to that in the flue gas at the discharge position, and is used to burn garbage in the primary combustion chamber 33. The mixed gas of the recirculating flue gas flowing in the gas line for secondary combustion 522 and the high-concentration O₂ gas supplied from the second oxygen supplier 62 is supplied as a gas for secondary combustion into the secondary combustion chamber 34. The gas for secondary combustion has an O₂ concentration that is higher than or equal to that in the flue gas at the discharge position, and is used to burn an unburnt gas in the secondary combustion chamber 34. In each of the gas line for primary combustion 521 and the gas line for secondary combustion 522, for example, the flow rate of the gas for combustion can be controlled by adjusting the degree of opening of the damper. The flow rate of the gas for combustion can be specified by the degree of opening of the damper.

The nitrogen mixer 7 includes a nitrogen gas reservoir 70, a first nitrogen supplier 71, and a second nitrogen supplier 72. The nitrogen gas reservoir 70 is a gas container such as a gas cylinder and is connected to the oxygen producer 60. The nitrogen gas reservoir 70 stores air exhausted from the oxygen producer 60 after extraction of O₂. The air from which O₂ has been extracted is a gas that has a higher nitrogen (N₂) concentration than the recirculating flue gas taken out from the discharge position, and such a gas is hereinafter referred to as the "high concentration N₂ gas." The N₂ concentration in the high concentration N₂ gas may, for example, be higher than or equal to 50%, preferably higher than or equal to 70%, and more preferably higher than or equal to 90%.

The first nitrogen supplier 71 and the second nitrogen supplier 72 receive a supply of the high concentration N₂ gas from the nitrogen gas reservoir 70. The first nitrogen supplier 71 is connected to the gas line for primary combustion 521 and can supply the high concentration N₂ gas to the recirculating flue gas flowing in the gas line for primary combustion 521. The second nitrogen supplier 72 is connected to the gas line for secondary combustion 522 and can supply the high concentration N₂ gas to the recirculating flue gas flowing in the gas line for secondary combustion 522. Each of the first nitrogen supplier 71 and the second nitrogen supplier 72 is provided with, for example, a damper and can change a mixture amount of the high concentration N₂ gas to be mixed with the recirculating flue gas by adjusting the degree of opening of the damper. The mixture amount of the high concentration N₂ gas can be specified by the degree of opening of the damper. Each nitrogen supplier may also be provided with a flowmeter that measures the flow rate of the high concentration N₂ gas.

The nitrogen mixer 7 mixes the high concentration N₂ gas as necessary with the recirculating flue gas flowing in the recirculating flue gas line 52. The first nitrogen supplier 71 and the second nitrogen supplier 72 may also use outside air as the high concentration N₂ gas. Alternatively, equipment or the like that extracts an N₂ gas from air (e.g., a PSA nitrogen-gas producer) may be provided instead of the nitrogen gas reservoir 70.

In normal operation of the waste incineration plant 1, it is preferable that the gas for combustion (e.g., air) other than the recirculating flue gas mixed with the high-concentration O₂ gas (and the high concentration N₂ gas) may be hardly supplied into the incinerator 3, and it is more preferable that only the recirculating flue gas serves as the gas for combustion supplied via a gas pipe into the incinerator 3. This considerably reduces the amount of flue gas exhausted from the stack 47 in the waste incineration plant 1. Since almost no air is supplied as the gas for combustion, the CO₂ concentrations in the flue gas and in the recirculating flue gas are typically higher than the N₂ concentrations. Therefore, the incinerator 3 burns garbage in an atmosphere with a high CO₂ concentration. For example, the recirculating flue gas may have a CO₂ concentration of 10 to 70%, an N₂ concentration of 5 to 60%, and an O₂ concentration of 18 to 24%.

As described previously, although in the preferable waste incineration plant 1, only the recirculating flue gas is supplied as the gas for combustion into the incinerator 3 via the gas pipe, a small amount of air (i.e., other than infiltration air or the like) may be supplied as part of the gas for combustion via a gas pipe within a range in which the recirculating flue gas supplied into the incinerator 3 is regarded as the main gas of the gas for combustion. In actuality, infiltration air or the like (e.g., air coming in together with garbage at the time of disposal of the garbage) is also used for combustion. The main gas of the gas for combustion may, for example, be a gas that makes up 50% or more of the gas for combustion, preferably a gas that makes up 65% or more, more preferably a gas that makes up 80% or more, and yet more preferably a gas that makes up 100% of the gas for combustion. In the initial stage of operation of the waste incineration plant 1, air may be used as the gas for combustion. By continuing operation while minimizing the amount of air supplied from the outside of the system into the incinerator 3, it is possible to gradually reduce the amount of nitrogen contained in the flue gas and to make carbon dioxide, water, and surplus oxygen become main components of the flue gas passing through the CO₂ collector 45. This operation increases the concentration of carbon dioxide contained in the flue gas and thereby allows the CO₂ collector 45 to efficiently separate carbon dioxide.

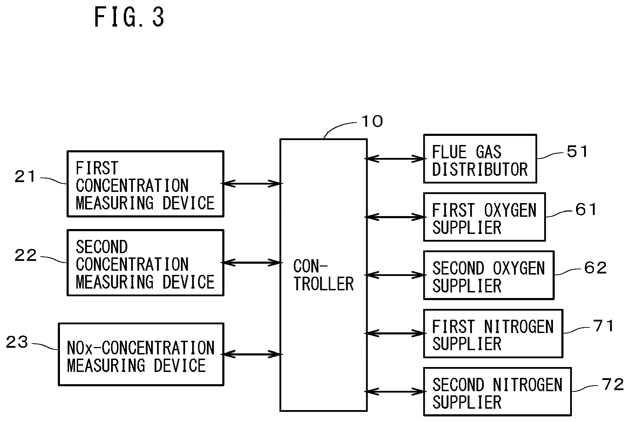

As shown in Fig. 1, the waste incineration plant 1 further includes a first concentration measuring device 21, a second concentration measuring device 22, and an NOx-concentration measuring device 23. The first concentration measuring device 21 measures the CO₂ concentration in the recirculating flue gas flowing in the gas line for primary combustion 521. In the example shown in Fig. 1, the measurement position of the first concentration measuring device 21 is located upstream of the position of mixing the high-concentration O₂ gas and the position of mixing the high concentration N₂ gas (on the side of the flue gas distributor 51). The measured value obtained by the first concentration measuring device 21 is output to a controller 10 which will be described later (see Fig. 3). The first concentration measuring device 21 can also measure the O₂ concentration and the N₂ concentration. The measurement position of the first concentration measuring device 21 may be located downstream of the position of mixing the high-concentration O₂ gas and the position of mixing the high concentration N₂ gas (on the side of the incinerator 3).

The second concentration measuring device 22 measures the CO₂ concentration in the recirculating flue gas flowing in the gas line for secondary combustion 522. In the example shown in Fig. 1, the measurement position of the second concentration measuring device 22 is located upstream of the position of mixing the high-concentration O₂ gas and the position of mixing the high concentration N₂ gas. The measured value obtained by the second concentration measuring device 22 is output to the controller 10. The second concentration measuring device 22 can also measure the O₂ concentration and the N₂ concentration. The measurement position of the second concentration measuring device 22 may be located downstream of the position of mixing the high-concentration O₂ gas and the position of mixing the high concentration N₂ gas.

The NOx-concentration measuring device 23 measures the nitrogen oxide (NOx) concentration in the flue gas flowing in the flue gas passage 4. In the example shown in Fig. 1, the measurement position of the NOx-concentration measuring device 23 is located between the wet scrubber 43 and the flue gas distributor 51 (in actuality, in the vicinity of the outlet of the wet scrubber 43) in the flue gas passage 4. The measured value obtained by the NOx-concentration measuring device 23 is output to the controller 10. The measurement position of the NOx-concentration measuring device 23 may be located in the vicinity of the outlet of the dust collector 42 or at the stack 47. The measurement position of the NOx-concentration measuring device 23 may also be located upstream of the position of mixing the high-concentration O₂ gas and the position of mixing the high concentration N₂ gas in the recirculating flue gas line 52. In this case as well, it is practically possible to measure the NOx-concentration in the flue gas exhausted from the incinerator 3.

Fig. 3 is a block diagram showing the controller 10 and other constituent elements of the waste incineration plant 1. The controller 10 may, for example, be a computer that includes a CPU and so on and performs overall control of the waste incineration plant 1. Fig. 3 also shows some constituent elements that are electrically connected to the controller 10 (the first concentration measuring device 21, the second concentration measuring device 22, the NOx-concentration measuring device 23, the flue gas distributor 51, the first oxygen supplier 61, the second oxygen supplier 62, the first nitrogen supplier 71, and the second nitrogen supplier 72). The control performed by the controller 10 is described hereinafter.

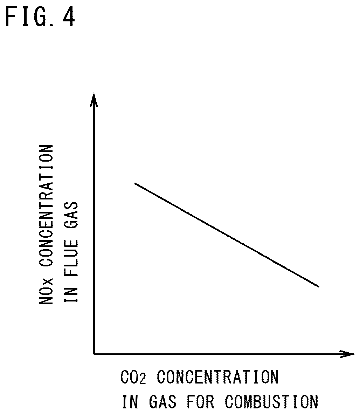

The waste incineration plant 1 acquires and prepares, in advance, information that indicates the relationship between the CO₂ concentration in the recirculating flue gas supplied as the gas for combustion into the incinerator 3 and the NOx concentration in the flue gas (this information is hereinafter referred to as the "CO₂-NOx concentration information"). Fig. 4 is a diagram showing one example of the CO₂-NOx concentration information. In the present embodiment, the CO₂-NOx concentration information is acquired for each of the gas for primary combustion flowing in the gas line for primary combustion 521 and the gas for secondary combustion flowing in the gas line for secondary combustion 522. As described previously, the gas for primary combustion and the gas for secondary combustion are the recirculating flue gases that are mixed with the high-concentration O₂ gas.

The CO₂-NOx concentration information about the gas for primary combustion associates the CO₂ concentration in the gas for primary combustion supplied into the incinerator 3 with the NOx concentration in the flue gas produced by garbage incineration using the gas for primary combustion. The CO₂ concentration in the gas for primary combustion is calculated by using the measured value of the CO₂ concentration obtained by the first concentration measuring device 21, the mixture amount of the high-concentration O₂ gas to be mixed by the first oxygen supplier 61, the mixture amount of the high concentration N₂ gas to be mixed by the first nitrogen supplier 71, and the flow rate of the gas for primary combustion. In the case where the measurement position of the first concentration measuring device 21 is located downstream of the position of mixing the high-concentration O₂ gas and the position of mixing the high concentration N₂ gas, the measured value of the CO₂ concentration obtained by the first concentration measuring device 21 is handled as the CO₂ concentration in the gas for primary combustion. The NOx concentration in the flue gas indicated by the CO₂-NOx concentration information about the gas for primary combustion is the measured value of the NOx concentration obtained by the NOx-concentration measuring device 23. The NOx concentration in the flue gas is associated with the CO₂ concentration in the gas for primary combustion in consideration of a time difference from when the gas for primary combustion is supplied into the incinerator 3 to when the flue gas produced from the gas for primary combustion reaches the measurement position of the NOx-concentration measuring device 23.

When the CO₂-NOx concentration information about the gas for primary combustion is prepared, the range of the CO₂ concentration in the gas for primary combustion (hereinafter referred to as the "set range") within which the NOx concentration inside the incinerator 3 is lowered is set. The set range is the range within which the NOx concentration in the flue gas becomes lower than or equal to a predetermined value according to the CO₂-NOx concentration information. Here, NOx is less likely to be produced if garbage is burnt in an atmosphere with a sufficiently high CO₂ concentration. Besides, NO contained in the recirculating flue gas serving as the gas for combustion is likely to be reduced to N₂. As a result, NOx contained in the flue gas decreases. The aforementioned set range is the range of the CO₂ concentration within which the NOx concentration inside the incinerator 3 is lowered as a result of suppressing the production of NOx and accelerating the reduction of NOx. In this way, the set range of the CO₂ concentration in the gas for primary combustion is determined. Although, in the CO₂-NOx concentration information shown in Fig. 4, the NOx concentration in the flue gas decreases as the CO₂ concentration in the gas for combustion increases, in actuality, the NOx concentration in the flue gas may become higher when the CO₂ concentration in the gas for combustion is excessively high.

For the gas for secondary combustion, the CO₂-NOx concentration information is also prepared and a set range of the CO₂ concentration in the gas for secondary combustion is determined in the same manner as in the case of the gas for primary combustion. The relationship between the CO₂ concentration in the recirculating flue gas and the amount of NOx in the flue gas may be used to determine the set range of the CO₂ concentration. The amount of NOx is obtained by multiplying the NOx concentration by the flow rate of the flue gas. In this case, with reference to this relationship, the range within which the amount of NOx becomes less than or equal to the predetermined value is determined as the set range of the CO₂ concentration.

Here, in the waste incineration plant 1, the CO₂ concentration in the flue gas fluctuates depending on, for example, the quality of garbage to be burnt in the incinerator 3 or the O₂ concentration in the gas for combustion. In a first example of control by the controller 10, for each of the gas for primary combustion and the gas for secondary combustion, the mixture amount of the high-concentration O₂ gas is controlled so as to make the CO₂ concentration fall within the set range. Focusing on the gas for primary combustion, as described previously, the CO₂ concentration in the gas for primary combustion is calculated by using the measured value of the CO₂ concentration obtained by the first concentration measuring device 21, the mixture amount of the high-concentration O₂ gas to be mixed by the first oxygen supplier 61, the mixture amount of the high concentration N₂ gas to be mixed by the first nitrogen supplier 71, and the flow rate of the gas for primary combustion. For example, in the case where the CO₂ concentration in the gas for primary combustion that is calculated with the current mixture amount of the high-concentration O₂ gas to be mixed by the first oxygen supplier 61 becomes higher than the set range, the mixture amount of the high-concentration O₂ gas is increased to become greater than the current mixture amount and to lower the actual CO₂ concentration in the gas for primary combustion. In the case where the calculated CO₂ concentration in the gas for primary combustion becomes lower than the set range, the mixture amount of the high-concentration O₂ gas is reduced to become less than the current mixture amount and to raise the actual CO₂ concentration in the gas for primary combustion.

In the present embodiment, the range of the O₂ concentration required for incinerating garbage (which may, for example, be a range of 18% to 24% and hereinafter referred to as the "required concentration range") is set in advance for the gas for primary combustion. Thus, the mixture amount of the high-concentration O₂ gas is increased and decreased within such a range that the O₂ concentration in the gas for primary combustion does not fall outside the required concentration range. In this way, the first oxygen supplier 61 controls the mixture amount of the high-concentration O₂ gas to be mixed by the first oxygen supplier 61 so that the CO₂ concentration in the gas for primary combustion falls within the set range while the O₂ concentration in the gas for primary combustion is maintained within the required concentration range. Note that the CO₂ concentration in the gas for primary combustion may temporarily fall outside the set range in order to maintain the O₂ concentration in the gas for primary combustion within the required concentration range.

For the gas for secondary combustion, control similar to that for the gas for primary combustion is performed. That is, the second oxygen supplier 62 controls the mixture amount of the high-concentration O₂ gas so that the CO₂ concentration in the gas for secondary combustion falls within the set range while the O₂ concentration in the gas for secondary combustion is maintained within the required concentration range in the gas for secondary combustion. Note that the CO₂ concentration in the gas for secondary combustion may temporarily fall outside the set range in order to maintain the O₂ concentration in the gas for secondary combustion within the required concentration range.

In a second example of control by the controller 10, for each of the gas for primary combustion and the gas for secondary combustion, the mixture amount of the high concentration N₂ gas is controlled to make the CO₂ concentration fall within the set range. For example, in the case where the CO₂ concentration in the gas for primary combustion that is calculated from the current mixture amount of the high concentration N₂ gas to be mixed by the first nitrogen supplier 71 is higher than the set range, the mixture amount of the high concentration N₂ gas is increased to become greater than the current mixture amount and to lower the actual CO₂ concentration in the gas for primary combustion. In the case where the calculated CO₂ concentration in the gas for primary combustion is lower than the set range, the mixture amount of the high concentration N₂ gas is reduced to become less than the current mixture amount and to raise the actual CO₂ concentration in the gas for primary combustion.

In this way, the mixture amount of the high concentration N₂ gas to be mixed by the first nitrogen supplier 71 is controlled such that the CO₂ concentration in the gas for primary combustion falls within the set range. For the gas for secondary combustion, control similar to that for the gas for primary combustion is performed. That is, the amount of the high concentration N₂ gas to be mixed by the second nitrogen supplier 72 is controlled such that the CO₂ concentration in the gas for secondary combustion falls within the set range. Mixing the high concentration N₂ gas with the recirculating flue gas enables readily bringing the CO₂ concentration within the set range while maintaining the O₂ concentration in the gas for combustion within the required concentration range. In the case where the O₂ concentration in the recirculating flue gas is relatively high, the reduction of NO contained in the recirculating flue gas is likely to be inhibited, but appropriate NO reduction is possible in the second example of control in which the high concentration N₂ gas is mixed with the recirculating flue gas.

The waste incineration plant 1 may combine the first and second examples of control by the controller 10. For example, in the case where the CO₂ concentration in the gas for primary combustion that is calculated from the current mixture amount of the high-concentration O₂ gas to be mixed by the first oxygen supplier 61 and the current mixture amount of the high concentration N₂ gas to be mixed by the first nitrogen supplier 71 is higher than the set range, the mixture amount of the high-concentration O₂ gas and the mixture amount of the high concentration N₂ gas are each increased to become greater than the current mixture amount. In the case where the calculated CO₂ concentration in the gas for primary combustion is lower than the set range, the mixture amount of the high-concentration O₂ gas and the mixture amount of the high concentration N₂ gas are each reduced to become less than the current mixture amount.

In this way, the mixture amount of the high-concentration O₂ gas to be mixed by the first oxygen supplier 61 and the mixture amount of the high concentration N₂ gas to be mixed by the first nitrogen supplier 71 are controlled so that the CO₂ concentration in the gas for primary combustion falls within the set range while the O₂ concentration in the gas for primary combustion is maintained within the required concentration range. For the gas for secondary combustion, in the same manner as in the case of the gas for primary combustion, the mixture amount of the high-concentration O₂ gas to be mixed by the second oxygen supplier 62 and the mixture amount of the high concentration N₂ gas to be mixed by the second nitrogen supplier 72 are controlled so that the CO₂ concentration in the gas for secondary combustion falls within the set range while the O₂ concentration in the gas for secondary combustion is maintained within the required concentration range.

In the examples of processing described above, the set range of the CO₂ concentration is provided for the recirculating flue gas (gas for combustion) supplied into the incinerator 3, but the value targeted for the set range does not necessarily have to be the value of the CO₂ concentration itself as long as this value relates to the CO₂ concentration (the value is hereinafter referred to as the "concentration-related value"). For example, the ratio of the CO₂ concentration and the N₂ concentration (CO₂/N₂ concentration ratio) or the ratio of the CO₂ concentration and the O₂ concentration (CO₂/O₂ concentration ratio) may be used as the concentration-related value. The CO₂/O₂ concentration ratio is derived from the measured values of the CO₂ concentration and the O₂ concentration obtained by the concentration measuring device (the first concentration measuring device 21 and the second concentration measuring device 22), and the CO₂/N₂ concentration ratio is derived from the measured values of the CO₂ concentration and the N₂ concentration. A set range of the concentration-related value is determined from the relationship between the concentration-related value of the gas for combustion and the NOx concentration in the flue gas, and the mixture amount of the high-concentration O₂ gas to be mixed by the oxygen mixer 6 or/and the mixture amount of the high concentration N₂ gas to be mixed by the nitrogen mixer 7 are controlled such that the concentration-related value falls within the set range. In either case, the CO₂ concentration in the recirculating flue gas becomes necessary to calculate the concentration-related value. Thus, the concentration measuring device may measure at least the CO₂ concentration in the recirculating flue gas flowing in the recirculating flue gas line 52.

The controller 10 can also control the flow rate of the recirculating flue gas on the basis of the measured value of the NOx concentration obtained by the NOx-concentration measuring device 23. For example, in the case where the measured value obtained by the NOx-concentration measuring device 23 is greater than or equal to a predetermined value, it is conceivable that the CO₂ concentration inside the incinerator 3 deviates largely from the set range. In this case, the flow rate of the recirculating flue gas recirculated by the flue gas recirculator 5 is increased to become higher than in the case where the measured value of the NOx concentration is less than the predetermined value. This makes it possible to make the CO₂ concentration inside the incinerator 3 fall within the set range in a short time. Besides, by increasing the flow rate of the recirculating flue gas in the initial stage of operation of the waste incineration plant 1, it is possible to raise the CO₂ concentration inside the incinerator 3 in a short time. If the O₂ concentration in the gas for combustion remains constant in the case of changing the flow rate of the recirculating flue gas, the amount of O₂ supplied into the incinerator 3 per unit time may fluctuate widely. In view of this, the O₂ concentration in the gas for combustion may also be changed so as to make the amount of O₂ approximately constant in the case of changing the flow rate of the recirculating flue gas.

The controller 10 does not necessarily have to always control the mixture amount of the high-concentration O₂ gas or/and the mixture amount of the high-concentration N₂ gas, and may control the mixture amount(s) only when a predetermined condition is satisfied. For example, these mixture amounts may be controlled when the measured value of the NOx concentration obtained by the NOx-concentration measuring device 23 is greater than or equal to a predetermined value. That is, the mixture amount of the high-concentration O₂ gas to be mixed by the oxygen mixer 6 or/and the mixture amount of the high concentration N₂ gas to be mixed by the nitrogen mixer 7 are controlled such that the concentration-related value falls within the set range. The control of the mixture amount(s) reduces the NOx concentration in the flue gas exhausted from the incinerator 3, and when the measured value obtained by the NOx-concentration measuring device 23 becomes less than the predetermined value, the control of the mixture amount(s) is stopped. As described above, the controller 10 performs control of the mixture amount(s) only in a limited case where the measured value obtained by the NOx-concentration measuring device 23 is greater than or equal to the predetermined value. This lessens the influence caused by the control of the mixture amount(s) (e.g., fluctuations in the temperature inside the incinerator 3).

As described above, the waste incineration plant 1 includes the flue gas recirculator 5 that takes out part of the flue gas flowing in the flue gas passage 4 as the recirculating flue gas through the recirculating flue gas line 52 and supplies the recirculating flue gas into the incinerator 3, the oxygen mixer 6 that mixes a high-concentration oxygen gas (high-concentration O₂ gas) having a higher O₂ concentration than air with the recirculating flue gas flowing in the recirculating flue gas line 52, and the concentration measuring device (in Fig. 1, the first concentration measuring device 21 and the second concentration measuring device 22) that measures the CO₂ concentration in the recirculating flue gas flowing in the recirculating flue gas line 52. The recirculating flue gas supplied into the incinerator 3 is the main gas of the gas for combustion that is used to incinerate garbage in the incinerator 3, and the concentration-related value relating to the CO₂ concentration in the recirculating flue gas supplied into the incinerator 3 (i.e., the gas for combustion ) is derived from the measured value obtained by the concentration measuring device. The controller 10 controls the mixture amount of the high-concentration O₂ gas to be mixed by the oxygen mixer 6 such that the concentration-related value falls within the set range within which the NOx concentration inside the incinerator 3 is lowered. This lowers the NOx concentration in the flue gas.

Preferably, the waste incineration plant 1 may further include the wet scrubber 43 arranged between the dust collector 42 and the discharge position of the recirculating flue gas in the flue gas passage 4. The wet scrubber 43 makes constant the water content in the recirculating flue gas. As a result, it becomes possible to reduce influences exerted on the above-described control of lowering the NOx concentration by fluctuation of the water content in the recirculating flue gas (e.g., excessively rising) and to accurately lower the NOx concentration in the flue gas.

Preferably, the recirculating flue gas line 52 may branch off into the gas line for primary combustion 521 connected to the primary combustion chamber 33 of the incinerator 3, and the gas line for secondary combustion 522 connected to the secondary combustion chamber 34 of the incinerator 3. The oxygen mixer 6 may include the first oxygen supplier 61 that supplies a high-concentration O₂ gas to the gas line for primary combustion 521, and the second oxygen supplier 62 that supplies a high-concentration O₂ gas to the gas line for secondary combustion 522.

Here, depending on the structure or the like of the incinerator 3, there may be a difference between the set range of the concentration-related value of the gas for primary combustion and the set range of the concentration-related value of the gas for secondary combustion. Moreover, one of the gas for primary combustion and the gas for secondary combustion may have a larger influence on the NOx concentration in the flue gas than the other gas for combustion has. In either case, in the waste incineration plant 1 that can individually control the CO₂ concentration in the gas for primary combustion and the CO₂ concentration in the gas for secondary combustion, it is possible to efficiently lower the NOx concentration in the flue gas.

Preferably, the waste incineration plant 1 may further include the nitrogen mixer 7 that mixes a high-concentration nitrogen gas (high-concentration N₂ gas) having a higher N₂ concentration than the recirculating flue gas with the recirculating flue gas flowing in the recirculating flue gas line 52. The controller 10 may control the mixture amount of the high concentration N₂ gas to be mixed by the nitrogen mixer 7 such that the concentration-related value falls within the set range. This enables readily adjusting the concentration-related value of the gas for combustion and more reliably lowering the NOx concentration in the flue gas.

In the waste incineration plant 1 including the nitrogen mixer 7, the controller 10 may control the mixture amount of the high concentration N₂ gas to be mixed by the nitrogen mixer 7 such that the concentration-related value falls within the set range, while controlling the mixture amount of the high-concentration O₂ gas to be mixed by the oxygen mixer 6 independently of the concentration-related value (for example, while controlling according to the amount of garbage and generated water vapor content). In this case as well, it is possible to lower the NOx concentration in the flue gas.

Preferably, the oxygen mixer 6 may include the oxygen producer 60 that produces the high-concentration O₂ gas by extracting O₂ from air. The high concentration N₂ gas contains air exhausted from the oxygen producer 60 after extraction of O₂. In this way, the oxygen producer 60 may substantially produce the high concentration N₂ gas in addition to the high-concentration O₂ gas. This facilitates the preparation of the high concentration N₂ gas.

Preferably, the nitrogen mixer 7 may include the first nitrogen supplier 71 that supplies the high concentration N₂ gas to the gas line for primary combustion 521, and the second nitrogen supplier 72 that supplies the high-concentration N₂ gas to the gas line for secondary combustion 522. This enables individually controlling the CO₂ concentration in the gas for primary combustion and the CO₂ concentration in the gas for secondary combustion and, as in the case where the first and second oxygen suppliers 61 and 62 are provided, efficiently lowering the NOx concentration in the flue gas.

Preferably, the waste incineration plant 1 may further include the NOx-concentration measuring device 23 that measures the NOx concentration in the flue gas exhausted from the incinerator 3. Then, the controller 10 performs the above-described control of the mixture amount(s) when the measured value obtained by the NOx-concentration measuring device 23 is greater than or equal to a predetermined value. In this waste incineration plant 1, it is possible to reduce side effects caused by the control of the mixture amount(s).

Alternatively, in the case where the measured value obtained by the NOx-concentration measuring device 23 is greater than or equal to the predetermined value, the controller 10 may increase the flow rate of the recirculating flue gas recirculated by the flue gas recirculator 5 to become higher than in the case where the measured value is less than the predetermined value. This enables adjusting the CO₂ concentration inside the incinerator 3 within the set range in a short time.

The waste incineration plant 1 described above may be modified in various ways.

The waste incineration plant 1 shown in Fig. 1 may include only one concentration measuring device in the recirculating flue gas line 52, and the concentration-related values of both of the gas for primary combustion and the gas for secondary combustion may be derived from the measured value obtained by the concentration measuring device.

In the above-described embodiment, the recirculating flue gas line 52 is connected to the primary and secondary combustion chambers 33 and 34 of the incinerator 3, and the recirculating flue gas mixed with the high-concentration O₂ gas is used as the gas for primary combustion and the gas for secondary combustion. Alternatively, the recirculating flue gas line 52 may be connected to only one of the primary combustion chamber 33 and the secondary combustion chamber 34.

Depending on the design of the waste incineration plant 1, constituent elements such as the nitrogen mixer 7, the wet scrubber 43, and the NOx-concentration measuring device 23 may be omitted. The oxygen mixer 6 may produce the high-concentration O₂ gas by, for example, electrolysis of water. The oxygen mixer 6 may also be an oxygen gas reservoir that stores oxygen. The oxygen gas reservoir may, for example, be a gas container such as a gas cylinder.

The incinerator 3 may be an incinerator other than a stoker-type incinerator (e.g., a fluidized bed furnace or a kiln furnace). The waste incineration plant 1 may be used as a waste incineration plant that incinerates industrial waste or domestic waste other than garbage.

The configurations of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

### REFERENCE SIGNS LIST

- 1: waste incineration plant
- 3: incinerator
- 4: flue gas passage
- 5: flue gas recirculator
- 6: oxygen mixer
- 7: nitrogen mixer
- 10: controller
- 21, 22: concentration measuring device
- 23: NOx-concentration measuring device
- 33: primary combustion chamber
- 34: secondary combustion chamber
- 42: dust collector
- 43: wet scrubber
- 52: recirculating flue gas line
- 60: oxygen producer
- 61: first oxygen supplier
- 62: second oxygen supplier
- 71: first nitrogen supplier
- 72: second nitrogen supplier
- 521: gas line for primary combustion
- 522: gas line for secondary combustion

## Claims

1. A waste incineration plant comprising:
an incinerator that incinerates waste;
a flue gas passage in which a flue gas exhausted from said incinerator flows;
a dust collector provided in said flue gas passage;
a flue gas recirculator that includes a recirculating flue gas line and takes out part of said flue gas flowing in said flue gas passage as a recirculating flue gas through said recirculating flue gas line to supply said recirculating flue gas into said incinerator, said recirculating flue gas line connecting said incinerator and a discharge position located downstream of said dust collector in said flue gas passage;
an oxygen mixer that mixes a high-concentration oxygen gas having a higher oxygen concentration than air with said recirculating flue gas flowing in said recirculating flue gas line;
a concentration measuring device that measures at least a carbon dioxide concentration in said recirculating flue gas flowing in said recirculating flue gas line; and
a controller that controls a mixture amount of said high-concentration oxygen gas to be mixed by said oxygen mixer to make a concentration-related value fall within a set range within which an NOx concentration inside said incinerator is lowered, said concentration-related value relating to a carbon dioxide concentration in said recirculating flue gas supplied into said incinerator, said concentration-related value being derived from a measured value obtained by said concentration measuring device, said recirculating flue gas supplied into said incinerator being a main gas of a gas for combustion that is used to incinerate said waste in said incinerator.

2. The waste incineration plant according to claim 1, further comprising:
a wet scrubber that is arranged between said dust collector and said discharge position in said flue gas passage and makes constant a water content in said recirculating flue gas.

3. The waste incineration plant according to claim 1, further comprising:
a nitrogen mixer that mixes a high-concentration nitrogen gas having a higher nitrogen concentration than said recirculating flue gas with said recirculating flue gas flowing in said recirculating flue gas line,
wherein said controller controls a mixture amount of said high-concentration nitrogen gas to be mixed by said nitrogen mixer to make said concentration-related value fall within said set range.

4. A waste incineration plant comprising:
an incinerator that incinerates waste;
a flue gas passage in which a flue gas exhausted from said incinerator flows;
a dust collector provided in said flue gas passage;
a flue gas recirculator that includes a recirculating flue gas line and takes out part of said flue gas flowing in said flue gas passage as a recirculating flue gas through said recirculating flue gas line to supply said recirculating flue gas into said incinerator, said recirculating flue gas line connecting said incinerator and a discharge position located downstream of said dust collector in said flue gas passage;
an oxygen mixer that mixes a high-concentration oxygen gas having a higher oxygen concentration than air with said recirculating flue gas flowing in said recirculating flue gas line;
a nitrogen mixer that mixes a high-concentration nitrogen gas having a higher nitrogen concentration than said recirculating flue gas with said recirculating flue gas flowing in said recirculating flue gas line;
a concentration measuring device that measures at least a carbon dioxide concentration in said recirculating flue gas flowing in said recirculating flue gas line; and
a controller that controls a mixture amount of said high-concentration nitrogen gas to be mixed by said nitrogen mixer to make a concentration-related value fall within a set range within which an NOx concentration inside said incinerator is lowered, said concentration-related value relating to a carbon dioxide concentration in said recirculating flue gas supplied into said incinerator, said concentration-related value being derived from a measured value obtained by said concentration measuring device, said recirculating flue gas supplied into said incinerator being a main gas of a gas for combustion that is used to incinerate said waste in said incinerator.

5. The waste incineration plant according to claim 3 or 4, wherein
said oxygen mixer includes an oxygen producer that produces said high-concentration oxygen gas by extracting oxygen from air, and
said high-concentration nitrogen gas contains air exhausted from said oxygen producer after extraction of oxygen.

6. The waste incineration plant according to claim 3 or 4, wherein
said recirculating flue gas line branches off into a gas line for primary combustion and a gas line for secondary combustion, said gas line for primary combustion being connected to a primary combustion chamber of said incinerator, said gas line for secondary combustion being connected to a secondary combustion chamber of said incinerator, and
said nitrogen mixer includes:
a first nitrogen supplier that supplies said high-concentration nitrogen gas to said gas line for primary combustion; and
a second nitrogen supplier that supplies said high-concentration nitrogen gas to said gas line for secondary combustion.

7. The waste incineration plant according to any one of claims 1 to 4, further comprising:
an NOx-concentration measuring device that measures an NOx concentration in said flue gas exhausted from said incinerator,
wherein when a measured value obtained by said NOx-concentration measuring device is greater than or equal to a predetermined value, said controller increases a flow rate of said recirculating flue gas supplied by said flue gas recirculator to become higher than when said measured value is less than said predetermined value.

8. The waste incineration plant according to any one of claims 1 to 4, further comprising:
an NOx-concentration measuring device that measures an NOx concentration in said flue gas exhausted from the incinerator,
wherein controlling of said mixture amount by said controller is performed when a measured value obtained by said NOx-concentration measuring device is greater than or equal to a predetermined value.

9. The waste incineration plant according to any one of claims 1 to 4, wherein
said recirculating flue gas line branches off into a gas line for primary combustion and a gas line for secondary combustion, said gas line for primary combustion being connected to a primary combustion chamber of said incinerator, said gas line for secondary combustion being connected to a secondary combustion chamber of said incinerator, and
said oxygen mixer includes:
a first oxygen supplier that supplies said high-concentration oxygen gas to said gas line for primary combustion; and
a second oxygen supplier that supplies said high-concentration oxygen gas to said gas line for secondary combustion.
